Europäisches Patentamt

European Patent Office

Office européen des brevets

(11) Publication number: **0 242 451 B1**

# EUROPEAN PATENT SPECIFICATION

(45) Date of publication of patent specification: **03.07.91**  (51) Int. Cl.⁵: **F16C  33/26**

(21) Application number: **86200703.6**

(22) Date of filing: **24.04.86**

(54) Helically wound bushing.

(43) Date of publication of application:
**28.10.87 Bulletin  87/44**

(45) Publication of the grant of the patent:
**03.07.91 Bulletin  91/27**

(84) Designated Contracting States:
**DE FR GB**

(56) References cited:
**DE-A- 2 950 576     DE-C- 669 888
DE-C- 835 963        US-A- 3 167 366
US-A- 3 185 531      US-A- 4 003 562
US-A- 4 043 567**

(73) Proprietor: **V.W. Kaiser Engineering, Inc.
8642 Gleason Street
Millington Michigan 48746(US)**

(72) Inventor: **Smith, Joseph E.
2288 Northlawn
Birmingham MI 48009(US)**

(74) Representative: **Ardin, Pierre
PIERRE ARDIN & CIE 22, rue du Mont-Blanc
Case postale 60
CH-1211 Genève 1(CH)**

## Description

The present invention relates to bushings in general and more particularly to helically wound bushings, as defined in the preamble of claim 1 and a method of making them.

The German Patent DE-C-835963 describes such a bearing especially intended to receive a pin of very small diameter, i.e. smaller than 1 mm., such as used in the watchmaking industry. A coil-spring made of a wire with circular cross-section is inserted into a bore, wherein the helical spaces comprised between the turns of the spring and the pin, respectively the wall of the bore constitutes a storage space for lubricant.

In US-A-4,003,562 and US-A-4,043,567, both assigned to the same assignee as the present application, there are disclosed spiral bushings, for use, for example, in heavy motor vehicle spring shackles and steering knuckle assemblies. The spiral bushings disclosed therein are made from flat strips of high grade tool steel cut at an angle at each end, bevelled and notched on the edges. The strips are helically wound into a cylindrical configuration resembling a helical tension spring in that each coil or spiral abuts the adjacent coil or spiral. The tapered ends of the strips provide square ends when the strips are wound into a cylindrical configuration. The strips are rectangular in cross-section with a ratio of width to thickness of about 7 to 1.

The helically wound cylinder is, after annealing, placed in a die, and sized for roundness by hydraulically driving a sizing mandrel through it. The bushings are subsequently heat treated for hardness, ground, and honed in their interior. Their peripheral surface is ground, after which a contra-helical grease distribution groove is form-ground on the peripheral surface to prevent blockage of the grease port if improperly oriented during installation, the bevelled edges of the strip providing external and internal lubricant distribution grooves, and the edge notches lubricant passageways from the external grooves to the internal grooves.

The resulting product is a precision tool steel helically wound bushing or bearing having the unique capability of being manually installed in and removed from a bore by twisting axially thus reducing the outside diameter of the bushing sufficiently to eliminate the interference fit with the bore. Once installed in the bore, the bushing springs back to a compression fit. However, such bushings are high in material cost, processing costs, and other associated production costs.

The present invention is an improvement on the helically wound bushings disclosed in the aforesaid documents and provides helically wound bushings made in the form of helical tension springs wound from spring steel wire, as set forth in the characterising part of claim 1 and a method of making such bushings as set forth in claim 5. Bushings thus manufactured give a substantial saving in cost. By appropriate machining and grinding or honing of the internal surface and grinding of the external surface of the helically wound cylindrical spring wire, bushings for applications similar to the helically wound flat strip bushings are provided with any appropriate ratio of width to the thickness of the coils or spirals from 1 to 1, without machining, to 2 to 1, 3 to 1, or more, depending on the diameter of the wire, the wall thickness sought to be obtained, and the amount of grinding acceptable. For some applications, only the internal surface needs to be ground and honed, while, for other applications only the external surface of the bushings needs to be ground. Because of the closely wound spirals of the bushing and the relative narrowness of each spiral, many lubrication trapping grooves are formed on the peripheral surface, or on the internal surface of the bushings and, for most applications, it has been discovered that edge notching for providing lubricant passageways from the peripheral surface to the internal surface of the bushings may be dispensed with.

Flat strip bushings as disclosed in the aforesaid patents are wound to an external diameter larger than the internal diameter of the bore in which they are installed, and thus they require a substantial torsional force to wind them up for reducing their outside diameter for installation or removal. With bushings made of helically wound spring wire according to the present invention, the torsional force required for winding up the bushings for installation and removal is substantially reduced, unless it is desired to provide a substantial preload force to be applied by the bushings on the surface of the bore in which they are installed.

The diverse objects and advantages of the present invention will become apparent to those skilled in the art when the following description of the best modes contemplated at the present for practicing the invention is read in conjunction with the accompanying drawing wherein like reference numerals refer to like or equivalent parts, and in which:

FIG. 1 is a schematic illustration of an example of application of helically wound bushings according to the present invention to a motor vehicle steering knuckle assembly;

FIG. 2 is a partial section of the assembly of FIG. 1 as seen from line 2-2 of FIG. 1;

FIG. 3 is a perspective view of an example of a helically wound bushing according to the present invention;

FIG. 4 is a schematic sectional view through the helically wound bushing of FIG. 3;

FIGS. 5-13 are views similar to FIG. 4 but showing modifications thereof; and

FIGS. 14-15 are views illustrating the installation in a receiving bore of a helically wound bushing according to the invention.

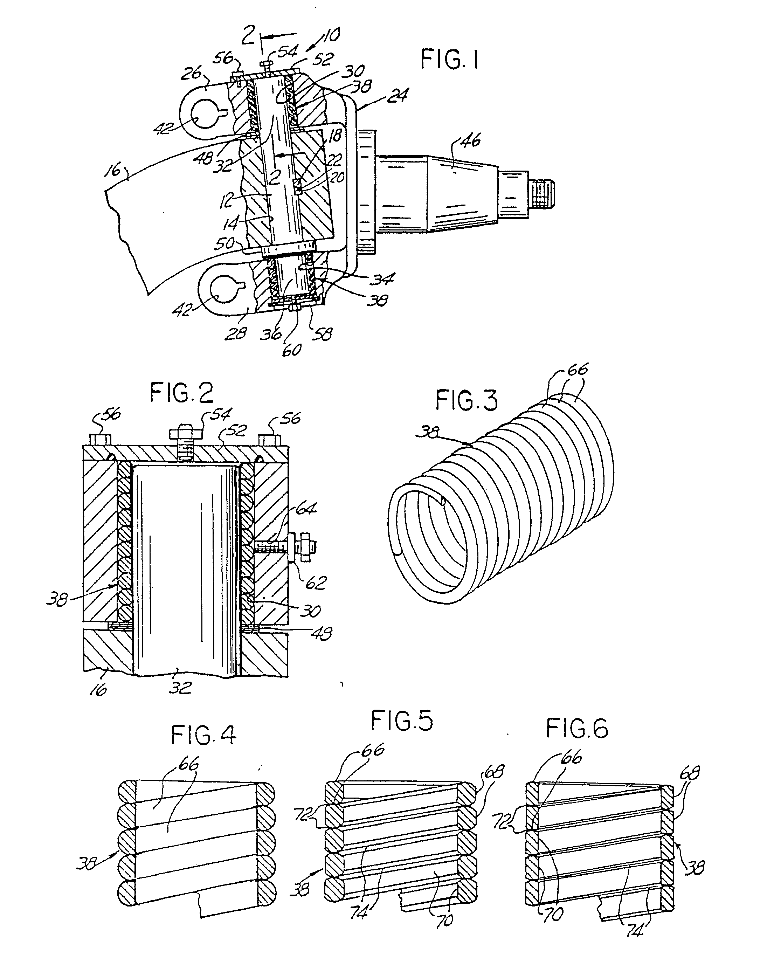

Referring to the drawing and more particularly to FIG. 1, there is illustrated a steering knuckle assembly 10 as an example of application of the helically wound bearing of the invention. The steering knuckle assembly 10 comprises a kingpin 12 mounted in a bore 14 in opposite ends of the rigid front axle or beam 16 of a motor vehicle, not shown, such as a truck for example. The kingpin 12 is mounted substantially vertically by means of a tapered lock pin 18 pressed through a tapered channel 20 through the axle or beam 16 and a corresponding straight notch 22 formed on the periphery of the kingpin 12. In this manner, the kingpin 12 is held in the bore 14 against rotation and against vertical displacement along its longitudinal axis. A wheel spindle knuckle 24 is pivotally mounted relative to the kingpin 12 by way of two integral upper and lower yoke portions 26 and 28, the upper yoke portion having a bore 30 accepting the upper end portion 32 of the kingpin 12, while the lower yoke portion 28 is similarly provided with a bore 34 surrounding the kingpin lower end portion 36. A helically wound bushing 38 is disposed in the upper yoke bore 30 for pivotally supporting the upper yoke portion 26 around the kingpin upper end portion 32, and a similar helically wound bushing 38 is disposed in the lower yoke bore 34 between the bore surface and the lower end portion 36 of the kingpin 12. The two wheel spindle knuckles 24, one on each end of the axle or beam 16, are coupled for simultaneous pivoting by an appropriate tie rod, not shown, generally provided with a ball and socket joint at its ends, the ball, for example, having a stud fastened through an aperture opening 42 at one of the yoke members, while another tie rod displaced by the steering mechanism of the vehicle is attached at its end by way of a stud fastened through another opening 42 disposed in the other yoke member.

The upper and lower yoke members 26 and 28 are integral parts of a single-piece forging, for example, and they form a generally U-shaped member supporting the spindle 46 of a steerable road wheel, not shown. A plurality of annular spacer shims 48 are mounted around the kingpin 12 where it projects on the top of the axle or yoke beam 16 to provide appropriate clearance between the upper yoke portion 26 and the axle or beam 16, while an annular thrust bearing 50 is disposed around the kingpin 12 where it projects below the axle or beam 16, the thrust bearing 50 transmitting the load from the axle or beam 16 to the lower yoke portion 28.

The upper end of the upper yoke bore 30 is closed by a cap 52, FIGS. 1 and 2, provided substantially at its center with a one-way check valve 54 and fastened on the top of the upper yoke 26 by means of bolts, such as bolts 56. Similarly, the end of the lower yoke member bore 34 is closed by an end cap 58 also provided with a one-way check valve 60. The check valves 54 and 60 permit to observe visually the escape of lubricant introduced through grease fittings, such as the grease fitting 62, FIG. 2, having a passageway 64 leading into the yoke bore, such as the upper yoke bore 30, to properly lubricate the peripheral surface of the kingpin portions 32 and 36 and the helically wound bushings 38. When lubricant is observed to flow through the check valves 54 and 60, it is an indication that the kingpin-yoke assembly has been fully lubricated.

The helically wound tubular member, is cut off from a length of helically wound spring wire with circular cross section of any appropriate diameter, in the form of a tension spring having adjacent spirals. The prewound, or precoiled spring wire is obtained as a stock material in any convenient length, wound to an appropriate outside diameter. In order to make a helically wound bushing 38, the stock material is cut at right angle to its longitudinal axis by, for example, an abrasive disk and each length forming an individual helically wound bushing 38 is subsequently resized and straightened in an appropriate die.

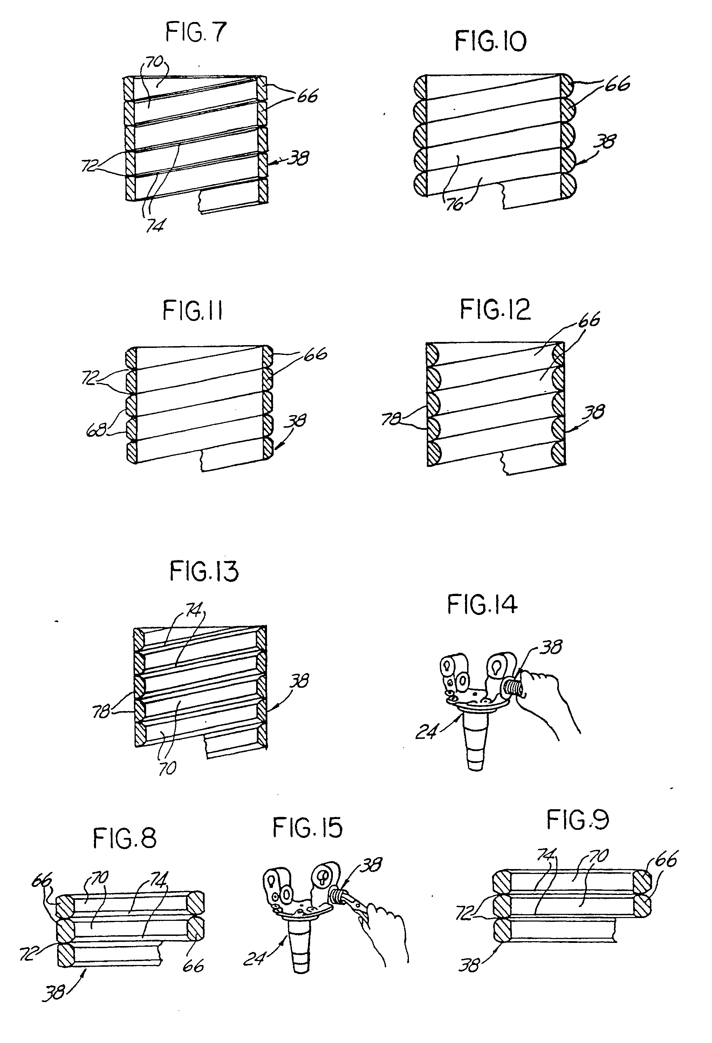

For some applications, the helically wound bushing 38 is ground and/or honed on its peripheral surface, or ground and/or honed on its internal surface, Fig. 4, 10, and 12, according to which one of the surfaces is desired to be used as a bearing surface. For most applications, the helical bushing 38 is ground and/or honed on both its internal and external diameters such that every coil or spiral 66 is no longer circular in cross section but is provided with a flat 68 on its exterior surface, FIGS. 5-7, and with a flat 70 on its inner surface. The result is that the periphery of the bushing 38 consists of consecutive adjacent cylindrical surfaces, helically disposed, for engagement with the bore surface in which the bushing 38 is ultimately installed, such as the yoke bores 30 and 34, FIG. 1, for example, and the bore of the bushing consists of a succession of spirally or helically arranged cylindrical surfaces, corresponding to the flat 70, providing a bearing surface for a member such as the kingpin ends 32 and 36.

The depths of grinding of the outer diameter of the helically wound bushing 38 and of the internal diameter may be equal as illustrated in the progression of FIGS. 5 through 7, resulting in final dimensions and in the thickness of the wall of the bushing 38 being what is desirable for a particular application.

Examples of unequal rates of machining of the peripheral surface and of the internal surface are illustrated at FIGS. 8 and 9 to demonstrate the versatility of the invention for producing helically wound bushings.

A continuous helical groove, as shown in 72, is formed around the periphery of the helically wound bushing 38, thus doing away with the requirement of providing tapered edges in the flat strip of prior art spiral bushings for forming lubricant distributing grooves. Similarly, a continuous helical internal groove 74 is formed between consecutive adjacent coils or spirals 66 of the helically wound bushing 38 for supplying lubricant to the bearing surfaces between a cylindrical member, such as the kingpin end portions 32 and 36, FIGS. 1, and the bushing bore. Although the helically wound spring wire bushing 38 is wound as a tension spring causing consecutive coils or spirals 66 to engage each other at their edge with a certain amount of elastic pressure, the elastic pressure may be controlled such as when a lubricant, such as grease, for example, is introduced under pressure through the grease fitting 62, FIG. 2, the consecutive coils or spirals 66 are caused to elastically separate, thus offering passage to the lubricant from the exterior grooves 72 of the bushing to the interior grooves 74, without requiring notching, thus providing adequate lubrication to the bushing bore surface. In addition, because the coils or spirals 66 are relatively narrow, no special precaution is required, when installing the bushing 38 in a bore, for registering the peripheral helical groove 72 with the outlet of a grease fitting, and no counter groove is necessary.

Starting with a cylindrical spring wire which is helically wound to an appropriate diameter and by grinding the interior and exterior of the bushing, any appropriate ratio of the width of the coils or spirals 66 to the wall thickness of the bushing 38 may be achieved, from a 1 to 1 ratio, as illustrated at FIG. 3, wherein no machining of the outer diameter and inner diameter of the bushing is effected to a ratio of 2 or 3 to 1, or more, as illustrated at FIG. 7.

For some applications, it may be desirable to leave the outer diameter of the bushing 38 untouched and to grind and hone the inner diameter such as to form a helically wound smooth cylindrical inner surface 76, as illustrated at FIG. 10, thus having a width of coils or spirals 66 to bushing wall thickness in the ratio of 2 to 1. If a better bearing surface on the periphery of the bushing 38 is required, the periphery may be ground to an appropriate outer diameter resulting in flats 68 being spirally helically formed on the periphery of the bushing 38, FIG.11.

FIG. 12 illustrates a structural example wherein the internal surface of the helically wound bushing 38 has been left intact and the peripheral surface has been ground and/or honed to a cylindrical surface4 78, thus defining a bearing surface for sliding or pivotal engagement with a bore. FIG. 13 illustrates a similar structure wherein, however, flats, such as flats 70 have been ground and/or honed on the internal surface on the spirally or helically wound bushing 38 of FIG. 10, such as to form a helically wound cylindrical bearing surfaces on the interior of the bushing.

In applications wherein the helical bushings 38 are mounted in a bore, such as the bores 30 and 34 of the yokes 26 and 28 of a wheel steering knuckle 24, as illustrated at FIG. 1, the outer diameter of the bushing 38 is slightly larger than the diameter of the receiving bores. The helical bushings 38 are nonetheless easy to install manually, as illustrated at FIGS. 14 and 15 by introducing one end of the bushing into the bore end and pushing the bushing into the bore while winding the other end of the bushing in the appropriate direction reducing the diameter of the bushing. An ordinary tool, such as pliers for example, may be finally used for finishing installing the bushing in the bore, still applying an appropriate rotation to the bushing to wind it up to a smaller diameter while pushing the bushing into the bore.

## Claims

1. A helical bearing bushing interposed between a bore (30,34) and a cylindrical member (32,36), said bushing comprising a tubular member (38) having an internal surface for engagement with said cylindrical member (32,36) and an external surface for engagement with said bore (30,34), said tubular member (38) comprising a length of spring wire helically wound into consecutive coils (66), having a predetermined tensile force therebetween, each coil having at least one arcuate surface for abutting an arcuate surface of an adjacent coil and the tensile force elastically holding a portion of said arcuate surfaces in mutual abutment and wherein non abutting portions of said arcuate surfaces define a spiral lubricant groove (72,74) formed in at least one of said internal and said external surfaces, characterized in that a lubricant supplied under pressure to one of the said internal and external surfaces can overcome said tensile force and pass to the other of said internal and external surfaces by elastically separating said butting arcuate surfaces, and in that at least one of said internal and external surfaces is machined (68,70,76,78).

2. The helical bushing of claim 1 wherein the internal diameter of said tubular member (38) is machined (Fig. 10).

3. The helical bushing of claim 1 wherein the external diameter of said tubular member (38) is machined (Fig. 12).

4. The helical bushing of claim 1 wherein both the external and internal diameters of said tubular member (38) are machined (Figs. 5-9, 11, 13).

5. A method of making the helical bushing of claim 1, comprising helically winding a length of spring wire having a circular cross section into said tubular member (38) of predetermined internal and external diameters with a predetermined tension force causing said arcuate portions of the coils to be elastically in mutual abutment under said determined tensile force, and forming at least one helical cylindrical surface (70, 78) by reduction of at least one of the diameters of said tubular member (38) by machining.

6. The method of claim 5 wherein said reduction of at least one of the diameters is effected on the internal diameter of said tubular member (38)(Fig. 10).

7. The method of claim 5 wherein said reduction of at least one of the diameters is effected on the external diameter of said tubular member (38)(Fig. 12).

8. The method of claim 5 wherein said reduction of at least one of the diameters is effected on both the external and internal diameters of said tubular member (38) (Fig. 5-9, 11, 13).

9. The method of anyone of claims 5 to 8 wherein said machining is grinding.

10. The method of anyone of claims 5 to 8 wherein said machining is honing.

**Revendications**

1. Douille de glissement hélicoïdale interposée entre un alésage (30, 34) et un élément cylindrique (32, 36), ladite douille comprenant un élément tubulaire (38) présentant une surface intérieure destinée à venir en prise avec ledit élément cylindrique (32, 36) et une surface extérieure destinée à venir en prise avec ledit alésage (30, 34), ledit élément tubulaire (38) comprenant une longueur de fil à ressort enroulée de façon hélicoïdale en bobines consécutives (66) ayant une force de traction prédéterminée entre elles, chaque bobine prèsentant au moins une surface courbée en arc venant en contact avec une surface courbée en arc d'une bobine adjacente, la force de traction maintenant élastiquement une partie desdites surfaces courbées en arc en contact mutuel, et dans laquelle les parties non en contact desdites surfaces courbées en arc définissent une rainure de graissage en spirale (72, 74) formée dans au moins une desdites surfaces intérieure et extérieure, caractérisée en ce qu'un lubrifiant alimentant sous pression l'une desdites surfaces intérieure et extérieure peut surmonter ladite force de traction et circuler vers l'autre desdites surfaces intérieure et extérieure, par séparation réalisée élastiquement desdites surfaces de contact courbées en arc, et en ce qu'au moins l'une desdites surfaces intérieure et extérieure est usinée (68, 70, 76, 78).

2. Douille de glissement hélicoïdale selon la revendication 1, caractérisée en ce que le diamètre intérieur dudit élément tubulaire (38) est usiné (figure 10).

3. Douille de glissement hélicoïdale selon la revendication 1, caractérisée en ce que le diamètre extérieur dudit élément tubulaire (38) est usiné (figure 12).

4. Douille de glissement hélicoïdale selon la revendication 1, caract érisée en ce que les deux diamètres extérieur et intérieur dudit élément tubulaire (38) sont usinés (figure 5-9, 11, 13).

5. Procédé de fabrication de la douille de glissement hélicoïdale selon la revendication 1, comprenant une longueur de fil à ressort de section transversale circulaire enroulée de façon hélicoïdale dans ledit élément tubulaire (38) de diamètres intérieur et extérieur prédéterminés, avec une force de traction prédéterminée, de sorte que lesdites parties courbées en arc des bobines sont élastiquement en contact mutuel sous l'effet de ladite force de traction déterminée, et qu'on obtient la formation d'au moins une surface cylindrique hélicoïdale (70, 78) par réduction d'au moins l'un des diamètres dudit élément tubulaire (38) par usinage.

6. Procédé selon la revendication 5, caractérisé en ce que ladite réduction d'au moins l'un des diamètres s'effectue sur le diamètre intérieur dudit élément tubulaire (38) (figure 10).

7. Procédé selon la revendication 5, caractérisé en ce que ladite réduction d'au moins l'un des diamètres s'effectue sur le diamètre extérieur dudit élément tubulaire (38) (figure 12).

8. Procédé selon la revendication 5, caractérisé ence que ladite réduction d'au moins l'un des diamètres s'effectue sur les deux diamètres extérieur et intérieur dudit élément tubulaire (38) (figures 5-9, 11, 13).

9. Procédé selon l'une des revendications 5 à 8, caractérisé en ce que l'usinage s'effectue par meulage.

10. Procédé selon l'une des revendications 5 à 8, caractérisé en ce que l'usinage s'effectue par aiguisage.

## Ansprüche

1. Zwischen einer Bohrung (30,34) und einem Zylinderzapfen (32,36) angeordnete schraubenförmige Lagerbüchse, die aus einem röhrenförmigen Teil (38) besteht, das eine am Zylinderzapfen (32,36) anliegende innere Oberfläche und eine an der Innenwandung der Bohrung (30,34) anliegende äußere Oberfläche besitzt, wobei das röhrenförmige Teil (38) aus zu schraubenförmigen, aufeinanderfolgenden, unter vorbestimmte Zugkraft gestellten Windungen (66) gewickeltem Federdraht besteht und jede Drahtwindung wenigstens eine gekrümmte Oberfläche besitzt, die an einer gekrümmten Oberfläche einer benachbarten Drahtwindung anliegt, und die Zugkraft einen Teil dieser gekrümmten Oberflächen in gegenseitiger Anlage hält und wobei weiterhin nicht anliegende Partien dieser gekrümmten Oberflächen eine gewunden verlaufende Schmiermittel-Nut in wenigstens einer der erwähnten inneren und äußeren Oberflächen bilden, **dadurch gekennzeichnet,** daß ein diesen inneren oder äußeren. Oberflächen unter Druck zugeführtes Schmiermittel die Zugkraft überwinden und unter elastischem Trennen dieser aneinander liegenden Oberflächen von der einen Oberflächenseite zur anderen Oberflächenseite gelangen kann und wobei wenigstens eine der erwähnten inneren und äußeren Oberflächen (68,70,76,78) spanabhebend bearbeitet ist.

2. Schraubenförmige Lagerbüchse nach Anspruch 1, bei der der Innendurchmesser des röhrenförmigen Teiles (38) spanabhebend bearbeitet ist (Fig. 10).

3. Schraubenförmige Lagerbüchse nach Anspruch 1, bei der der Außendurchmesser des röhrenförmigen Teiles (38) spanabhebend bearbeitet ist (Fig. 12).

4. Schraubenförmige Lagerbüchse nach Anspruch 1, bei der sowohl die äußeren als auch inneren Durchmesser des röhrenförmigen Teiles (38) spanabhebend bearbeitet sind (Fig.5-9, 11, 13).

5. Verfahren zum Herstellen einer schraubenförmigen Lagerbüchse nach Anspruch 1, bei dem ein einen kreisförmigen Querschnitt aufweisender Federdraht hinreichender Länge zu dem röhrenförmigen Teil (38) mit vorbestimmten inneren und äußeren Durchmessern schraubenförmig und mit vorbestimmter Zugkraft gewickelt wird, die die gekrümmten Teile der Windungen in gegenseitiger Anlage nachgiebig hält, und wobei wenigstens eine der schraubenförmigen zylindrischen Oberflächen (70,78) durch Verändern wenigstens einer der Durchmesser dieses röhrenförmigen Teiles (38) durch spanabhebende Bearbeitung geformt wird.

6. Verfahren nach Anspruch 5, bei dem die erwähnte Veränderung wenigstens eines der Durchmesser an dem Innendurchmesser des erwähnten röhrenförmigen Teiles (38) vorgenommen wird (Fig. 10).

7. Verfahren nach Anspruch 5, bei dem die erwähnte Veränderung wenigstens eines der Durchmesser an dem Außendurchmesser des erwähnten röhrenförmigen Teiles (38) vorgenommen wird (Fig. 12).

8. Verfahren nach Anspruch 5, bei dem die erwähnte Veränderung wenigstens eines der Durchmesser sowohl an den Außenals auch Innendurchmessern des erwähnten röhrenförmigen Teiles (38) vorgenommen wird (Fig. 5-9, 11, 13).

9. Verfahren nach einem der Ansprüche 5 bis 8, bei dem die spanende Bearbeitung durch Schleifen erfolgt.

10. Verfahren nach einem der Ansprüche 5 bis 8, bei dem die spanende Bearbeitung durch Honen erfolgt.

FIG. 1

FIG. 2

FIG. 3

FIG. 4

FIG. 5

FIG. 6

FIG. 7

FIG. 10

FIG. 11

FIG. 12

FIG. 13

FIG. 14

FIG. 8

FIG. 15

FIG. 9